# EUROPÄISCHE PATENTSCHRIFT

(11) **EP 1 701 801 B1**
(45) Veröffentlichungstag und Bekanntmachung des Hinweises auf die Patenterteilung: **12.03.2008**
(21) Anmeldenummer: 04804289.9
(22) Anmeldetag: 23.12.2004
(51) Int. Cl.: B05B 12/12

(54) **VERFAHREN ZUM ERKENNEN EINER AUF EINEM SUBSTRAT AUFZUBRINGENDEN STRUKTUR MIT MEHREREN KAMERAS SOWIE EINE VORRICHTUNG HIERFÜR**
METHOD FOR RECOGNISING A STRUCTURE TO BE APPLIED TO A SUBSTRATE, WITH THE AID OF SEVERAL CAMERAS AND DEVICE THEREFOR
PROCEDE DE RECONNAISSANCE D'UNE STRUCTURE A APPLIQUER SUR UN SUBSTRAT A L'AIDE DE PLUSIEURS CAMERAS ET DISPOSITIF CORRESPONDANT

(30) Priorität: 23.12.2003 DE 10361018
(43) Veröffentlichungstag der Anmeldung: 20.09.2006
(73) Patentinhaber: QUISS GMBH, 82178 Puchheim (DE)
(72) Erfinder: TOMTSCHKO, Andreas, 82223 Eichenau (DE); BERGER, Mirko, 80339 München (DE); LINNENKOHL, Jan, 81241 München (DE); RAAB, Roman, 81827 München (DE)
(74) Vertreter: Ascherl, Andreas
(86) Internationale Anmeldenummer: PCT/EP2004/014698
(87) Internationale Veröffentlichungsnummer: WO 2005/063406

(56) Entgegenhaltungen:
- WO-A-02/26397
- FR-A- 2 817 618
- US-A- 4 724 302
- US-A- 5 402 351
- US-A1- 2002 113 198

## Beschreibung

Die vorliegende Erfindung betrifft ein Verfahren zum Erkennen einer auf einem Substrat aufzubringenden Struktur mit mehreren Kameras gemäß dem Oberbegriff von Anspruch 1 sowie eine entsprechende Vorrichtung hierfür.

Herkömmlicherweise werden bislang zum Erkennen .einer auf einem Substrat aufzubringenden Struktur optische Vermessungen durchgeführt, wobei häufig verschiedene Systeme zur vollautomatischen Prüfung der Struktur, u.a. Klebstoff und Dichtmittelraupen, verwendet werden. Hierzu werden mehrere Videokameras auf die zu erkennende Struktur gerichtet, wobei zusätzlich ein Beleuchtungsmodul erforderlich ist, das zur Erzeugung eines kontrastreichen Kamerabildes dient.

Um eine Kleberraupe bzw. Kleberspur beim Auftragen überwachen zu können, ist es erforderlich, dass eine Referenzkleberspur eingelernt wird, d.h. von den Kameras abgefahren wird, um daraus entsprechende Parameter zu berechnen, nach denen die aufgebrachten Kleberspuren daraufhin bewertet werden.

Bisher war es erforderlich, dass beim Einlernen einer Referenzkleberspur jede Kamera einzeln diese Referenzkleberspur abfahren musste, um für alle Positionen Kamerabilder zu erhalten. Das heißt, dass bei der Verwendung von drei Kameras die Referenzkleberspur dreimal hintereinander abgefahren werden musste und die drei unterschiedlichen Bildsequenzen der drei Kameras zugeordnet werden mussten. Daraus ergibt sich der Nachteil, dass die Parametrierung der Referenzkleberspur umständlich und zeitintensiv ist sowie zu einer hohen Ungenauigkeit führen kann.

Darüber hinaus besteht Bedarf nach einem Verfahren zum Erkennen einer auf einem Substrat aufzubringenden Struktur für mehrere Kameras, welches eine Auftragsstruktur bzw. Kleberspur mit hoher Genauigkeit und Geschwindigkeit während des Auftragens überwacht.

US-A-5 402 351 offenbart eine Vorrichtung gemäß des erste Teil des Anspruchs 27 und Verfahren gemäß die erste Teilen des Ansprüchen 1 und 3.

Somit ist es Aufgabe der vorliegenden Erfindung, ein Verfahren zum Erkennen einer auf einem Substrat aufzubringenden Struktur für mehrere Kameras bereitzustellen, welches eine schnelle Inbetriebnahme mit hoher Genauigkeit bzw. ein schnelles Einlernen der Referenzkleberspur ermöglicht.

Des weiteren ist es Aufgabe der vorliegenden Erfindung, ein Verfahren zum Erkennen einer auf einem Substrat aufzubringenden Struktur für mehrere Kameras bereitzustellen, welches eine Auftragsstruktur bzw. Kleberspur mit hoher Genauigkeit und Geschwindigkeit während des Auftragens überwacht.

Ferner ist es Aufgabe der vorliegenden Erfindung, eine geeignete Vorrichtung zur Durchführung des erfindungsgemäßen Verfahrens bereitzustellen.

Diese Aufgaben werden verfahrenstechnisch mit den Merkmalen von Anspruch 1 und 3 sowie vorrichtungstechnisch mit den Merkmalen von Anspruch 27 gelöst.

Bei der erfindungsgemäßen Vorrichtung und dem erfindungsgemäßen Verfahren wird einerseits eine Referenzauftragsstruktur eingelernt und weitere aufgebrachte Auftragsstrukturen bzw. Kleberspuren zu dessen Bewertung mit der Referenzauftragsstruktur verglichen. Dabei ist es unerheblich, ob die erfindungsgemäße Auftragsvorrichtung, d.h. die Auftragsvorrichtung mit Kameras, oder als kinematische Umkehr das Substrat bewegt wird.

Das erfindungsgemäße Verfahren ermöglicht es, dass durch das Einlernen einer Referenzauftragsstruktur durch lediglich ein einmaliges Abfahren dieser Referenzauftragsstruktur die Bilder aller Kameras in einer Bildsequenz aufgenommen bzw. gespeichert werden können. Dadurch wird die Inbetriebnahme einer derartigen Vorrichtung auf eine kurze Einlernzeit verringert.

Gemäß einem erfindungsgemäßen Verfahren zum Erkennen einer auf einem Substrat aufzubringenden Struktur, vorzugsweise einer Kleberraupe oder Kleberspur, mit mehreren Kameras, wobei die aufgebrachte Struktur beim Abfahren für die Bewertung dieser Struktur derart als optisches Abbild verarbeitet wird, dass von jeder Kamera lediglich ein Streifen des Bildes unter Bildung einer Bildsequenz aufgenommen wird und die Bildaufnahmefrequenz entsprechend der Datenverminderung durch die Aufnahme von lediglich einen Streifen des Bildes erhöht wird, erhält man ein vorteilhaftes Erkennungsverfahren und Überprüfungsverfahren für eine aufzubringende Struktur, welches eine hohe Genauigkeit aufweist und vollautomatisierbar ist. Dadurch kann eine Kleberspur parallel bzw. simultan zum Aufbringen der Kleberspur überwacht werden.

Es ist ein Vorteil, wenn von jeder Kamera lediglich ein Streifen des Bildes unter Bildung eines Teils der Bildsequenz aufgenommen wird, um die zu verrechnenden Daten zu minimieren. Durch die geringeren zu verrechneten Daten können durch die hohe Bildaufnahmefrequenz vergleichsweise kurze Teilabschnitte der gesamten Kleberspur aufgenommen werden, welche beispielsweise zwischen 1 mm und 3mm liegen, so dass die Kleberspur nach Art einer Vektorkette aus den einzelnen Bildern automatisch verfolgt werden kann.

Darüber hinaus ist es von Vorteil, dass die Biidaufnahmefrequenz entsprechend der Datenverminderung durch die Aufnahme von lediglich einem Streifen des Bildes erhöht wird, was insbesondere durch den Einsatz der Partial-Scantechnik ermöglicht wird, so dass eine höhere Bildwiederholrate erreicht wird. Folglich ist es möglich, dass synchron und parallel von allen Kameras gleichzeitig Bilder erfasst werden können. Die Bildaufnahmen folgen somit in definierten festen Zeitabständen und sind unabhängig von der Robotersteuerung.

Erfindungsgemäß werden die Bildstreifen der einzelnen Kameras zu einem einzigen Bild zusammengefügt, wodurch sich der Vorteil ergibt, dass die jeweiligen Bilder der einzelnen Kameras jeweils ortsabhängig entsprechend zugeordnet sind und synchron aufgenommen und verarbeitet werden können. Somit wird des Weiteren ein fehlerhaftes Einlernen vermieden, da die Bilder der einzelnen Kameras stets zeit-und ortrichtig zugeordnet werden.

Gemäß einer bevorzugten Ausführungsform werden pro Kamera in etwa nur 1/4 der Bildzeilen als Bildstreifen verwendet und dadurch die Bildaufnahmefrequenz vervierfacht.

Des weiteren ist es vorteilhaft, wenn die Parametrierung der von der Referenzauftragsstruktur erhaltenen Bildsequenz, welche aus einem einzigen Bildaufnahmelauf aller Kameras resultiert, automatisch durch ein einmaliges externes Anzeigen bzw. externes Markieren (bspw. per Mausklick) der Referenzauftragsstruktur vorgenommen wird und zum Vergleich mit einer aufgebrachten Kleberspur verwendet wird. Für die Parametrierung wird insbesondere der Roboterverfahrweg, die Roboterverfahrzeit, die Richtung, die Breite und die Güte der Kleberspur verwendet. Durch dieses einfache Parametrierungsverfahren vermindert sich die Gefahr von Fehlbedienung oder Fehlparametrierung, wobei das System auch durch gering qualifiziertes Personal bedienbar ist. Somit erzeugt diese Parametrierung eine Vektorisierung der gesamten Kleberspur, wobei diese auf Grund der hohen Bildaufnahmefrequenz eine sichere und automatische Überprüfung der Kleberspur ermöglicht. Dadurch ergibt sich ferner, dass nach einem Tausch des Sensorkopfs lediglich eine Rekalibrierung bzw. eine Neukalibrierung erfolgen muss, ohne dass die Spur erneut eingelernt werden muss.

Gemäß einer bevorzugten Ausführungsform der Erfindung wird eine Bewertungsfunktion, insbesondere Fuzzy-Bewertung zum Auswerten der Klebstoffspur bzw. Kleberspur verwendet, wobei insbesondere die Breite des Kantenpaares der rechten und linken Kante der Kleberspur, der mittlere Grauwert des projizierten Grauwertprofils zwischen dem Kantenpaar, der Randkontrast und der Positionsverlauf mittels der Bewertungsfunktion verrechnet werden, wobei als Folge davon die Klebstoffspur genau beschrieben werden kann, um diese sicher automatisch zu erkennen.

Ferner ist es vorteilhaft, wenn die Kante der Kleberspur auf einer umlaufenden Bahn bzw. Umlaufbahn und insbesondere einer im wesentlichen kreisförmigen Bahn bzw. Kreisbahn ermittelt wird, um die Klebstoffspur um die Auftragseinrichtung herum bei einem beliebigen Verlauf jeweils in einem definierten Bereich zu erfassen. Dabei verläuft die Klebespur jeweils innerhalb der umlaufenden Bahn, die elipsenförmig, vieleckförmig oder in etwa kreisförmig sein kann.

Gemäß einer bevorzugten Ausführungsform stimmt der Mittelpunkt der Kreisbahn oder der umlaufenden Bahn im wesentlichen mit der Stelle überein, aus welcher der Kleber zur Bildung der Kleberspur austritt, wobei jede Kamera zumindest ein Segment des aus der Kreisbahn gebildeten Kreises überwacht.

Wenn jede Kamera zumindest einen Überlappungsbereich mit zumindest einer angrenzenden Kamera überwacht, können Fehler beim Übergang von einer Kamera zur nächsten vermindert werden.

Besonders vorteilhaft ist es, wenn die Winkelwerte der Kreisbahn von 0 bis 360° ein globales Koordinatensystem der einzelnen Kameras bilden, wobei den Bildern der einzelnen Kameras ein Segment der Kreisbahn zugeordnet wird. Als Folge davon kann der Verlauf der Kleberspur von jeweils zumindest einer aktiven Kamera verfolgt werden, wodurch mit relativ einfachen Mitteln Aussagen über die gesamte Kleberspur sowie deren Lage bzw. Verlauf getroffen werden kann.

Gemäß einer bevorzugten Ausführungsform deckt eine erste Kamera einen Winkelbereich von -10° bis 130° eine zweite Kamera einen Winkelbereich von 110° bis 250° und eine dritte Kamera einen Winkelbereich von 230° bis 10° ab, wenn drei Kameras verwendet werden.

Darüber hinaus ist es von Vorteil, wenn bei dem Verlauf der Kleberspur von einer Kamera zur nächsten automatisch umgeschaltet wird, wenn die Kleberspur von dem Segment der Kreisbahn oder Umlaufbahn einer Kamera über den Überlappungsbereich in das Segment der Kreisbahn oder Umlaufbahn einer anderen Kamera verläuft. Als folge davon ist es möglich, dass dem Verlauf der Spur bzw. der Lage der Spur sicher gefolgt werden kann und diese entsprechend voraussehbar sind. Somit kann rechtzeitig ein voll automatisches Umschalten der benachbarten Kameras erfolgen, so dass sich die Parametrierzeiten verringern.

Des Weiteren ist es von Vorteil, wenn zur Beleuchtung LED Leuchtmittel verwendet werden, welche eine Lichtfarbe umfassen, die einen geeigneten Kontrast zur Farbe der Auftragsstruktur aufweist. Die Lichtfarbe wird dabei derart ausgewählt, dass sich nach dem Prinzip der Komplementärfarben der größte Kontrast zwischen dem Substrat und der Klebstoffspur ergibt. Vorteilhafterweise werden Infrarot LED oder UV LEDs verwendet. Besondere Vorteile ergeben sich, wenn man Leuchtdioden verwendet, die auf Grund ihrer besonderen Bauweise in der Lage sind, rotes, grünes und blaues Licht zu emittieren, insbesondere bei der Verwendung von RGB LEDs. Somit kann der Sensoraufbau ohne weitere Umbauten auf eine entsprechende Klebstofffarbe umgestellt werden.

Wenn LEDs in Farbtrippeln aus den Farben Rot, Grün und Blau verwendet werden, kann die am besten geeignete Mischfarbe für die optimale Kontrastierung erzeugt werden.

Gemäß einer Ausgestaltung der Erfindung werden die LEDs geblitzt, wobei insbesondere Stromimpulse von 1,0 bis 0,01 ms auf die Dioden aufgebracht werden, um während des Abfahrens des Sensors über dem Substrat scharfe Bilder insbesondere von der Klebstoffspur zu erhalten.

Desweiteren ist es für eine dreidimensionale Positionskorrektur in bezug auf Lagetoleranzen der einzelnen Bauteile bzw. Toleranzen von Fügenähten vorteilhaft, wenn die Referenzkontur bzw. ein Merkmal von zumindest zwei Kameras ermittelt wird, um eine dreidimensionale Positionskorrektur für die Auftragseinrichtung mit Hilfe des Stereometrieverfahrens durchzuführen.

Ferner ist es von Vorteil, wenn die beiden Kameras das Substrat, einen Bauteilabschnitt oder ein oder mehrere Bauteile als Vollbild oder Großbild aufnehmen, wobei die Vollbilder oder Großbilder der beiden Kameras einen Überlappungsbereich in Vorlaufrichtung aufweisen, und wobei die sich im Überlappungsbereich ergebende dreidimensionale Lageerkennung der Referenzkontur zur Grobjustierung der Auftragseinrichtung vor dem Aufbringen der Struktur verwendet wird. Dabei wird der Auftragseinrichtung bzw. dem Roboter entsprechende Korrekturwerte übermittelt, um dessen Koordinatensystem für den Klebstoffauftrag zu verschieben.

Wenn eine Projektion zur dreidimensionalen Auswertung auf den Bereich der Referenzkontur aufgebracht wird, insbesondere wenn eine oder mehrere Laserlinien als Projektion auf das Substrat aufgebracht werden, dann kann eine dreidimensionale Profilauswertung hinsichtlich der Höhe und der Kontur von beliebigen Bauteilen ermöglicht werden, auch wenn diese für eine übliche Bildbearbeitung ohne zusätzliche Projektion nicht auswertbar ist.

Vorteilhafterweise wird eine Kalibrierung der einzelnen Kameras vorgenommen, um gemäß dem Kreiscaliper die Winkelzugehörigkeit der einzelnen Kameras vorzunehmen, wobei insbesondere ein Kreisbogen der Kalibriervorrichtung mit Markierungsstellen mit 0°, 120° und 240° für drei Kameras verwendet wird. Dadurch kann ein globales Koordinatensystem hinsichtlich der Winkelzugehörigkeit für die einzelnen Kameras auf dem Kreiscaliper um die Auftragseinrichtung herum für eine vereinfachte softwareseitige Bildverarbeitung verwendet werden.

Darüber hinaus kann der Abstand der Auftragseinrichtung zu einem Bauteilmerkmal gemessen werden, beispielsweise zu Bauteilkanten oder Löchern bzw. Durchbrüchen, um eine Lageprüfung der aufgebrachten Struktur durchzuführen. Dabei wird insbesondere zur Abstandsmessung eine linienförmige Grauwertkantenantastung bzw. linienförmige Caliper verwendet, so dass beliebig viele Referenzmarken gesetzt werden können, wobei die Bildauswertung nicht ausschließlich auf das Kamerabild beschränkt ist, in dem die Kleberspurprüfung stattfindet. Somit ist es nicht erforderlich, dass die Kleberspur und geeignete Referenzmerkmale in demselben Kamerabild zu sehen sind, was insbesondere hinsichtlich der parallelen Verarbeitung von drei Kamerabildern vorteilhaft ist.

Mit vorliegender Erfindung wird eine Vorrichtung zum Erkennen einer auf einem Substrat aufzubringenden Struktur, vorzugsweise eine Kleberraupe oder Kleberspur, zur Durchführung eines erfindungsgemäßen Verfahrens nach Anspruch 1 bzw. 3 bereitgestellt, wobei zumindest ein Beleuchtungsmodul und eine Sensoreinheit vorgesehen ist. Die Sensoreinheit ist aus mehreren Kameras aufgebaut, welche um die Einrichtung zum Auftragen der Struktur vorgesehen und angeordnet sind sowie auf die Einrichtung zum Auftragen der Struktur jeweils ausgerichtet sind. Dadurch ist es möglich, dass der Verfahrweg der Vorrichtung über einem Substrat bzw. ein Verfahrweg des Substrats bzgl. der Vorrichtung stets in allen Richtungen durch die Ausrichtung der Kameras auf die Auftragseinrichtung überwacht werden kann.

Wenn sich die axiale Längsachse der einzelnen Kameras in Blickrichtung im wesentlichen mit der axialen Längsachse der Auftragseinrichtung schneidet, so ist es gemäß einer derartigen Weiterbildung vorteilhaft, dass ein enger Bereich um die Auftragseinrichtung mit geeigneter Auflösung und hoher Bildaufnahmefrequenz überwacht werden kann.

Gemäß der Erfindung sind einzelne Kameras, insbesondere 3 Kameras, in Umfangsrichtung in jeweils gleichem Abstand voneinander angeordnet.

Vorteilhafterweise werden die einzelnen Kameras derart verschaltet, dass die Bilder der Kameras in einer Bildsequenz gespeichert werden, so dass diese Bilder synchron und parallel sowie zugeordnet aufgenommen werden können.

Gemäß der Erfindung bilden mehrere Kameras einen Kreiscaliper, dessen Mittelpunkt die Auftrageinrichtung der Struktur bildet. Dabei können ein oder mehrere kreisförmige Caliper verwendet werden, die es ermöglichen, dass die Ermittlung der Kante der Kleberspur auf einer Kreisbahn stattfindet.

Gemäß einer bevorzugten Ausführungsform weisen die einzelnen Kameras einen Überlappungsbereich von jeweils mindestens 10° zur nächsten Kamera auf. Dieser Überlappungsbereich ermöglicht ein vollautomatisches Umschalten von benachbarten Kameras, wenn die Klebstoffspur von dem Überwachungsbereich einer Kamera in den nächsten verläuft, da die Auswahl der Kamera nicht gebunden an die Roboterposition oder eine zeitliche Komponente gebunden ist, sondern sich auf die aktuellen Inspektionsergebnisse bezieht, d.h. auf die Anordnung auf der Umlaufbahn bzw. Kreisbahn des Kreiscalipers bzw. auf dem dadurch gebildeten globalen Koordinatensystem.

Ferner ist es von Vorteil, wenn das Beleuchtungsmodul aus LEDs, insbesondere Infrarot-LEDs, UV-LEDs oder RGB-LEDs aufgebaut ist.

Darüber hinaus ist es von Vorteil, wenn zur Kalibrierung der einzelnen Kameras für die Zuordnung der Winkelzugehörigkeit eine Kalibrierscheibe mit einzelnen Formelementen verwendet wird, wobei diese Formelemente insbesondere einen Winkelabstand von im wesentlichem 10° aufweisen. Dadurch kann der Skalierungsfaktor, die Winkelzugehörigkeit und der Mittelpunkt sowie der Radius des Suchkreises für die einzelnen Kameras zugeordnet werden. Erfindungsgemäß weist die Kalibrierscheibe zumindest drei Markierungsstellen auf, die in einem Kreisbogen der Kalibrierscheibe von im wesentlichen 0°, 120° und 240° angeordnet sind, um drei Kameras zu kalibrieren.

Wenn eine Projektionseinrichtung an der Auftragseinrichtung vorgesehen ist, welche oder mehrere Merkmale, insbesondere Streifen, auf das Substrat für die dreidimensionale Auswertung projiziert, dann können beliebige Bauteile für eine Korrektur bzw. Justierung der Auftragseinrichtung vor dem Aufbringen der Struktur verwendet werden.

Gemäß einer bevorzugten Ausführungsform sendet die Projektionseinrichtung eine oder mehrere Laserlinien zur dreidimensionalen Profilauswertung aus. Wenn zumindest zwei Projektionseinrichtungen rund um die Auftragseinrichtung angeordnet sind, dann wird eine lückenlose dreidimensionale Auswertung um die Auftragseinrichtung ermöglicht, wobei die Auswertung von Dichtmittelhöhe und Dichtmittelkontur sowie Lage und Breite nach dem Triangulationsprinzip mittels Bildverarbeitung vorgenommen werden kann.

Weitere vorteilhafte Ausgestaltungen der Erfindung sind Gegenstand der übrigen Unteransprüche.

Anhand der nachfolgenden Zeichnungen werden beispielhaft vorteilhafte Ausgestaltungen der Erfindung dargestellt.
Figur 1 zeigt eine schematische Seitenansicht einer erfindungsgemäßen Vorrichtung zum Auftragen und Überwachen einer Klebstoffspur.
Figur 2 zeigt eine perspektivische Ansicht der erfindungsgemäßen Vorrichtung von Figur 1.
Figur 3 zeigt den Verfahrweg der erfindungsgemäßen Vorrichtung zum Aufbringen und Überwachen einer Klebstoffspur.
Figur 4 zeigt einen anderen Verfahrweg der erfindungsgemäßen Vorrichtung bzgl. des Umschaltens der relevanten Kameras.
Figur 5 ist eine Darstellung eines einzigen Bilds, dass aus drei Bildstreifen von drei Kameras zur Online-Überwachung zusammengesetzt ist.
Figur 6 erläutert den prinzipiellen Aufbau der Software.
Figur 7 zeigt schematisch eine erfindungsgemäße Kalibriervorrichtung zum kalibrieren der einzelnen Kameras der erfindungsgemäßen Vorrichtung zum Erkennen einer auf einem Substrat aufzubringenden Struktur.
Fig. 8 stellt eine Draufsicht auf das Substrat mit aufgebrachter Klebstoffspur hinsichtlich der Auftragsüberwachung.
Fig. 9 zeigt eine Draufsicht hinsichtlich der Profilauswertung.

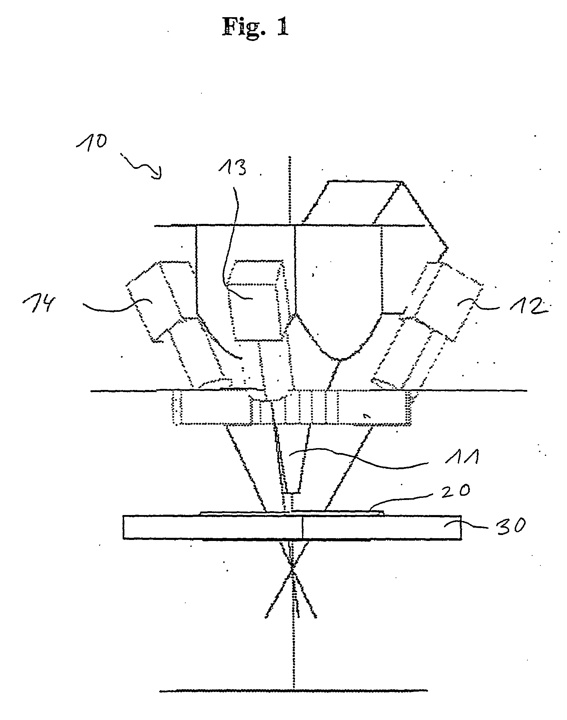

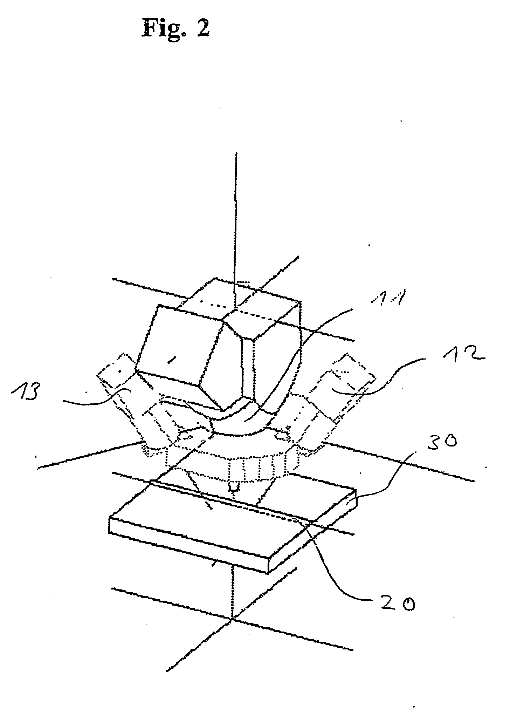

Im Weiteren wird nun der Aufbau der erfindungsgemäßen Vorrichtung zum Erkennen einer auf einem Substrat aufzubringenden Struktur gemäß den Figuren 1 und 2 erläutert.

Mit dem Bezugszeichen 10 ist die schematisch dargestellte Vorrichtung zum Aufbringen und Erkennen einer Kleberspur gezeigt. Dabei ist im Zentrum der erfindungsgemäßen Vorrichtung eine Auftragseinrichtung 11 angeordnet, durch welche eine Klebstoffspur 20 auf ein Substrat bzw. auf ein Blech 30 in der Fig. 1 von rechts nach links aufgebracht wird. Um die Auftragseinrichtung 11 sind in einem Kreis drei Kameras 12, 13, 14 in gleichmäßigem Abstand angeordnet, die auf die Auftragseinrichtung 11 jeweils ausgerichtet sind. Wie aus Figur 1 ersichtlich, schneiden sich die axialen Längsachsen der drei Kameras 12, 13, 14 mit der axialen Längsachse der Auftragseinrichtung 11 unmittelbar unterhalb des Substrats 30, sodass der Fokus der einzelnen Kameras unmittelbar um den Bereich der Auftragseinrichtung 11, insbesondere auf einer Kreisbahn, angeordnet ist.

Bei der Klebstoffinspektion wird nun entweder die Auftragseinrichtung mit den Kameras oder das Substrat verfahren, wobei gleichzeitig die Klebstoffspur 20 auf das Substrat 30 mittels der Auftragseinrichtung 11 aufgebracht wird und wobei die Kameras 12, 13, 14 die aufgebrachte Struktur überwachen. Es ist hierzu möglich, die Auftragseinrichtung mit den Kameras oder das Substrat zu verfahren, um die Klebstoffspur in einem gewünschten Verlauf auf dem Substrat 30 aufzubringen. Dadurch können die mitfahrenden Kameras simultan mit dem Auftragen die Klebstoffspur unabhängig von dem Verfahrweg überwachen. In Fig. 2 verläuft die Klebstoffspur 20 von links nach rechts, wobei diese als durchgezogene Linie dargestellt ist. Rechts von der Auftragseinrichtung 11 ist der beabsichtigte Verlauf der Klebstoffspur 20 mit gestrichelter Linie angezeigt.

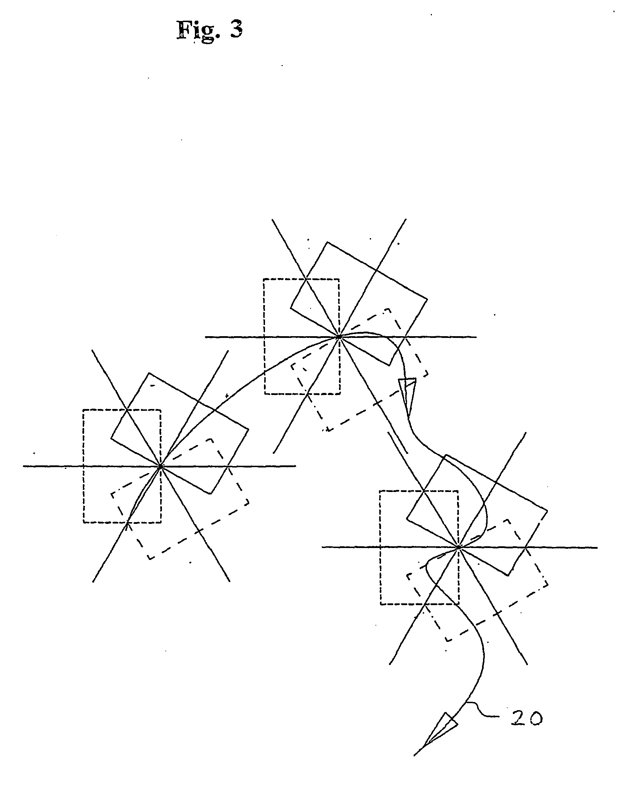

Figur 3 zeigt nun den Verlauf der Klebstoffspur 20, welcher mittels Pfeilen angezeigt wird, wobei an drei Stellen die Ausrichtung bzw. der Sichtbereich der einzelnen drei Kameras dargestellt ist. Die Sichtbereiche der einzelnen drei Kameras sind jeweils durch ein Rechteck mit durchgezogener Linie, ein Rechteck mit weit gestrichelten Linien und ein Rechteck mit eng gestrichelten Linien dargestellt. Wie aus der Figur ersichtlich bleibt die Ausrichtung der einzelnen Sichtbereiche stets konstant ausgerichtet, wobei lediglich die gesamte Vorrichtung verfahren wird.

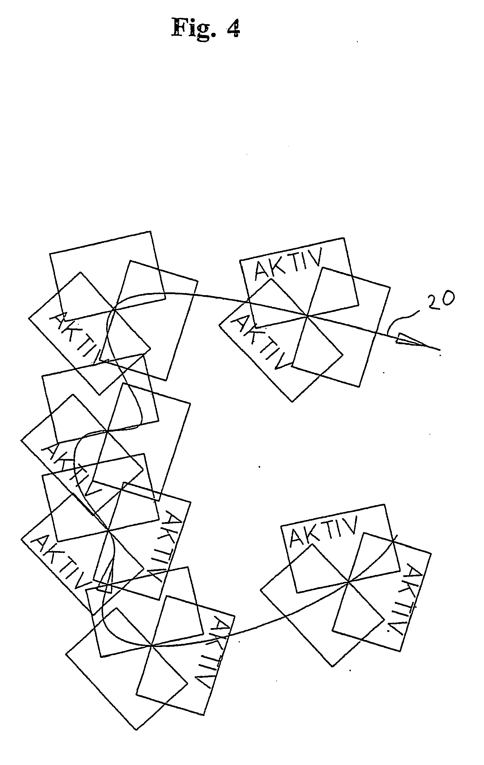

Figur 4 zeigt einen weiteren Verlauf einer Klebstoffspur 20, wobei jeweils angezeigt ist, welcher Sichtbereich aktiv ist, d.h. welche Kamera mit dem entsprechenden als Rechteck dargestellten Sichtbereich beim Abfahren der Klebstoffspur aktiv ist.

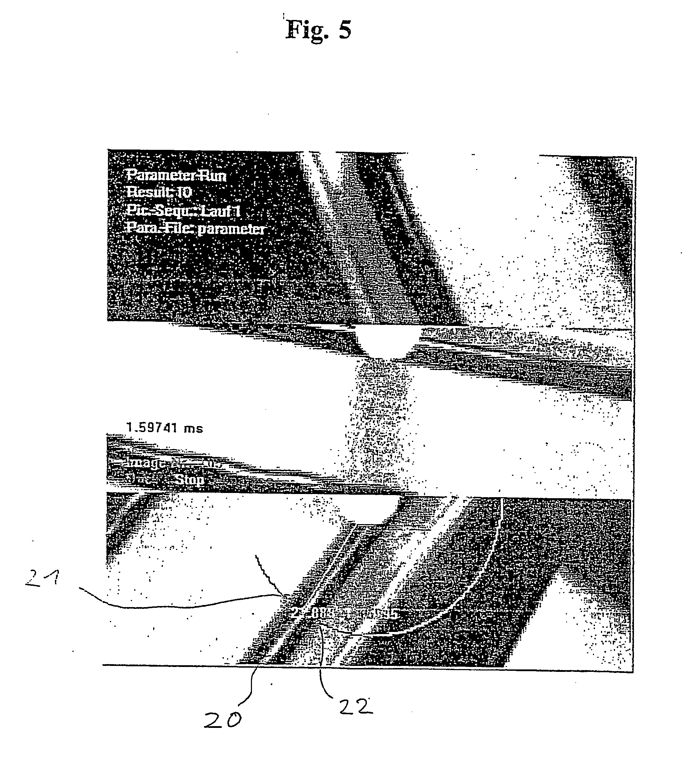

In Figur 5 sind nun drei Bildstreifen dargestellt, die jeweils einen relevanten Bildausschnitt bzw. Bildstreifen der einzelnen drei Kameras von Figur 1 darstellen. Gemäß dem erfindungsgemäßen Verfahren wird von jeder Kamera lediglich ein Streifen des Bildes aufgenommen, um für eine entsprechende Datenverminderung zu sorgen, sodass die Aufnahmefrequenz erhöht werden kann. Diese einzelnen Bildstreifen der drei Kameras werden zu einem Bild zusammengefügt, wobei die Bildaufnahmen in definierten festen Zeitabständen und unabhängig von der Robotersteuerung für die Auftragseinrichtung erfolgen. Beispielsweise nehmen die Kameras lediglich einen Steifen des Bildes auf, wobei an Stelle einer Bildhöhe von 480 Bildpunkten eine Bildhöhe von rund 100 Bildpunkten (100 Bildzeilen) verwendet wird. Durch diese Partial-Scan-Technik, d.h. ein teilweises Auslesen des Bildaufnahmechips, entstehen nur geringe Datenströme, so dass die Bildaufnahmefrequenz um das entsprechende vielfache erhöht werden kann. Bei der Auswertung der Daten ist es somit möglich, dass die Bilder der einzelnen Kameras synchron und parallel und folglich gleichzeitig erfasst werden können und anschließend zu einem einzigen Bild zusammengefügt werden, wobei die drei Bildstreifen untereinander angeordnet werden. Als Folge davon sind die drei Bilder, d.h. die drei Bildstreifen, sofort hinsichtlich des Ortes und der Zeit zueinander richtig angeordnet sowie zugeordnet und können entsprechend verarbeitet werden. Diese spezielle Bildaufnahmetechnik ermöglicht somit das gleichzeitige und parallele aufnehmen einzelner Kamerabilder, wodurch es möglich wird, dass beim Einlernen einer Referenzauftragsstruktur lediglich ein einmaliges Abfahren dieser Struktur vorgenommen werden muss, wobei die Bilder aller Kameras in einer Bildsequenz gespeichert werden.

Wenn die Bilder der drei Kameras in einer Bildsequenz gespeichert worden sind, wird beim Einlernen der Referenzkleberspur anschließend eine Parametrierung dieser Referenzspur durchgeführt. Für die Parametrierung wird der Roboterverfahrweg, die Roboterverfahrzeit, die Richtung, die Breite und die Güte der Klebespur verwendet. Somit ergibt sich für die Kleberspur eine Art Vektorkette, wodurch es möglich ist, die hohe Bildaufnahmefrequenz und die vergleichsweise kurzen Teilabschnitte (zwischen 1 und 3 mm) zu erzielen. Die Vektorvisierung hat ferner den Vorteil, dass die Kleberspur in Form einer Vektorkette in einem kameraübergreifenden, globalem Koordinatensystem abgelegt werden kann.

Wie aus dem untersten Streifen von Figur 5 ersichtlich, ist um das Zentrum der Auftragseinrichtung 11 eine Kreisbahn angeordnet, wobei die beiden Kantenpunkte 21 und 22 der Klebstoffspur 20 auf der Kreisbahn angeordnet sind. Diese Kreisbahn ist derart unterteilt, dass einer ersten Kamera ein Winkelbereich von -10° bis 130°, einer zweiten Kamera ein Winkelbereich von 110° bis 250° und einer dritten Kamera ein Winkelbereich von 230° bis -10° zugeordnet wird, sodass eine lückenlose Abdeckung mit Überlappungsbereichen der einzelnen Kameras um die Auftragseinrichtung 11 herum ermöglicht wird. Daraus ergibt sich für die drei Bildstreifen ein globales Koordinatensystem, welches sowohl kartesisch als auch polar ausgeführt sein kann.

Falls die Kleberspur nun aus dem Sichtbereich einer Kamera läuft, befindet sich die Kleberspur übergangsweise im Überlappungsbereich der Winkelbereiche der beiden Kameras. Wenn nun die Kleberspur von dem Segment der Kreisbahn der einen Kamera über den Überlappungsbereich in das Segment der Kreisbahn einer anderen Kamera verläuft, wird von der einen zur anderen Kamera automatisch umgeschaltet. Dies ist insbesondere in Figur 4 durch die aktiven Sichtbereiche der einzelnen Kameras dargestellt.

Die obigen Vorteile werden dadurch erzielt, dass die einzelnen Kameras einen Kreiscaliper bilden, dessen Mittelpunkt die Auftrageinrichtung 11 bildet, wobei die Suche nach den Kanten 21, 22 der Klebstoffspur auf einer Kreisbahn unmittelbar um die Auftragseinrichtung erfolgt. Hierzu ist es wesentlich, dass die einzelnen Kameras auf die Auftragseinrichtung ausgerichtet sind, wobei sich die axialen Längsachsen der einzelnen Kameras mit der Längsachse der Auftragseinrichtung schneiden.

Im Folgenden wird nun eine Teach-In-Lauf bzw. ein Einlernen einer Referenzkleberspur erläutert.

Der Einlernvorgang der Referenzkleberspur kann mittels eines Mausklicks vom Bediener auf die Spur begonnen werden, wodurch die Lage der Kleberspur angezeigt wird. Dies ist ausreichend, um in den nächsten Kamerabildern die Position und Richtung der Kleberspur voll automatisch zu erkennen, da die Bildaufnahmefrequenz entsprechend hoch ist und die einzelnen Bildaufnahmen sehr kurz hintereinander stattfinden, beispielsweise alle 1 mm bis 3 mm. Ab dem Startpunkt findet Bild für Bild die Kleberantastung statt, wobei die im aktuellen Bild gefundene Kleberspurposition und Kleberspurwinkel als A-Priori-Wissen für das kommende Bild verwendet wird. Da die Spurfadien zumeist größer als 20 mm betragen, wird somit das vollautomatische Erfassen der Kleberspur möglich, ohne dass ein Mensch das Bild bzw. die Lage der Kleberspur ermitteln bzw. bewerten muss. Als Folge davon kann der Suchbereich eingeschränkt werden, wodurch mittels der hohen Bildaufnahmefrequenz errechnet werden kann, wo die Kleberspur im wesentlichen im nächsten Bild verlaufen wird.

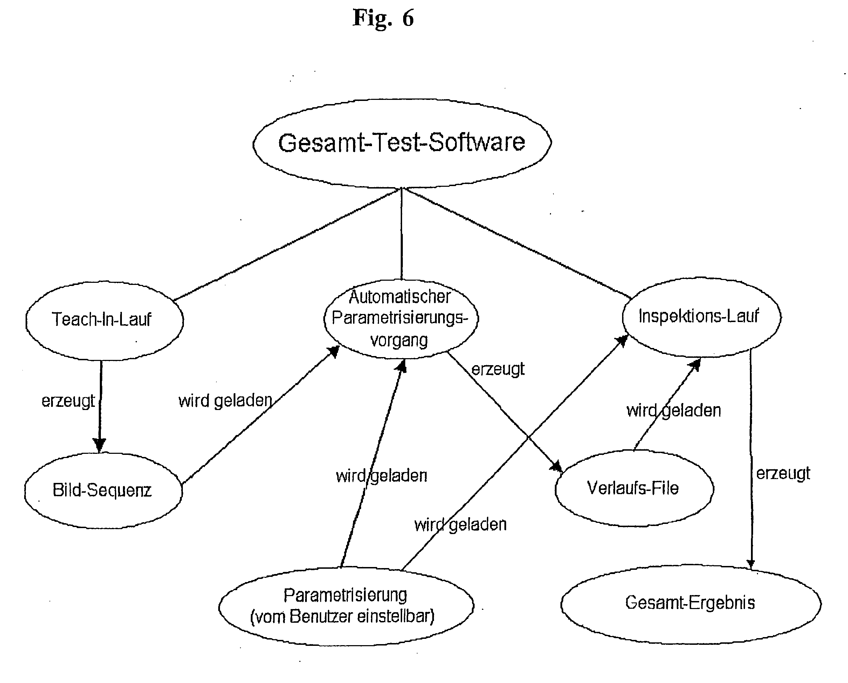

In Figur 6 ist der prinzipielle Aufbau der Software dargestellt, wobei der Teach-In-Lauf bzw. Einlernlauf die Bildsequenz erzeugt, welche daraufhin die automatische Parametrisierung ermöglicht. Diese Parametrisierung kann gegebenenfalls vom Benutzer voreingestellt werden und wird für den Inspektionslauf zusammen mit einem Verlaufs-file für die Inspektion einer aufgebrachten Klebstoffspur verwendet.

Die Onlineüberwachung einer aufgebrachten Klebstoffspur wird nun kurz erläutert. Die in Figur 1 gezeigte Auftragseinrichtung 11 bringt die Klebstoffspur auf das Blech 30 auf, wobei die Auftragseinrichtung 11 mit den Kameras über dem Blech 30 verfahren wird. Jedoch ist auch eine kinematische Umkehr möglich, d.h., dass das Blech 30 verfahren wird und die Auftragseinrichtung mit den Kameras ortsfest angeordnet ist. Die aufgetragene Klebstoffspur 20 wird synchron und parallel von den Kameras 12, 13, 14 auf der gemäß Figur 5 erläuterten Kreisbahn des Kreiscalipers ermittelt und ausgewertet, wobei von jeder Kamera jeweils lediglich ein Streifen des Bildes aufgenommen wird und in einem einzigen Bild unter Bildung einer Bildsequenz zusammengefügt wird. Entsprechend der Datenverminderung durch die Aufnahme von lediglich einem Streifen des Bildes jeder Kamera wird die Bildaufnahmefrequenz erhöht, wobei die einzelnen Bildstreifen in dem zusammengefügten Bild das synchrone und parallele sowie gleichzeitige Erfassen der drei Kamerabilder ermöglichen und wobei die einzelnen Bilder der drei Kameras unmittelbar ortsabhängig zugeordnet werden können. Somit wird eine Onlineüberprüfung der Klebstoffspur in Echtzeiten möglich, welche durch die hohe Bildaufnahmefrequenz sowohl beim Einlernen einer Referenzkleberspur als auch beim Überprüfen der aufgebrachten Kleberspur eine hohe Genauigkeit bei hohen Verfahrgeschwindigkeiten erzielt. Hierbei sind die Informationen über die Klebstoffspur im Klebersuchbereich, die Winkelzuordnung des Sensors, die Kleberbewertung, der Roboterverfahrweg und die Roboterverfahrzeit in einer Verlaufsliste zusammen gefasst.

Gemäß einer Ausführungsform der vorliegenden Erfindung kann eine Bewertungsfunktion zum Auffinden der Kanten der Klebstoffspur, insbesondere eine Fuzzy-Bewertung, verwendet werden. Um die Klebstoffspur zu ermitteln und zu bewerten, werden mittels einer Fuzzy-Bewertung folgende Parameter miteinander verrechnet:

Breite des Kantenpaares (Kante1: linke Kante der Klebstoffspur, Kante 2: rechte Kante der Kleberspur), mittlerer Grauwert des projizierten Grauwertprofils zwischen dem Kantenpaar, Randkontrast (geometrischer Mittelwert der Amplituden der beiden Kanten) und Positionsverlauf (gerichtete Abweichung des Mittelpunkts zwischen den beiden Kleberkanten vom Mittelpunkt des Suchbereichs in Pixel). Durch diese Vielzahl an Parametern kann, auch mit Hilfe der Fuzzy-Bewertungsfunktion, die Klebstoffspur sehr genau beschrieben werden, damit diese sicher automatisch erkannt wird.

Für die erfindungsgemäße Vorrichtung ist das nicht gezeigte Beleuchtungsmodul aus LEDs, insbesondere Infrarot-LEDs, UV-LEDs oder RGB-LEDs, aufgebaut. Um hohe Kontraste bei der Bildaufnahme zu erhalten, können die LEDs geblitzt werden, d.h., dass kurze, starke Stromimpulse auf die Dioden im Bereich von 1,0 bis 0,01 ms aufgebracht werden. Dabei sind insbesondere derartige Leuchtdioden vorteilhaft, die verschiedenfarbiges Licht emittieren können, sodass der Sensoraufbau ohne Umbauten auf andere Klebertypen bzw. Kleberfarben umgestellt werden kann.

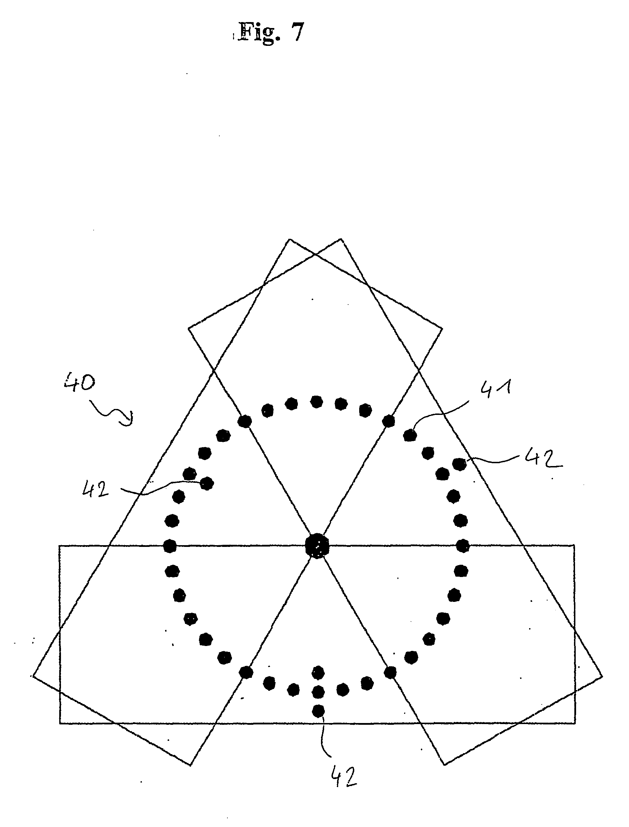

Figur 7 zeigt eine Kalibriereinrichtung 40 in Form einer kreisförmigen Kalibrierscheibe, um den einzelnen Kameras ihren Skalierungsfaktor, ihre Winkelzugehörigkeit und den Mittelpunkt sowie den Radius des Suchkreises zuzuordnen. Die Kalibrierscheibe besteht aus einzelnen auf einer Kreisbahn angeordneten Formelementen bzw. Dots 41, die jeweils in einem Winkelabstand von einem im wesentlichen 10° angeordnet sind. In gleichmäßigen Abstand voneinander sind ferner Markierungsstellen 42 angeordnet, um drei Kameras zu kalibrieren. Mittels einer Ausgleichsrechnung wird aus den Koordinaten der Mittelpunkte der einzelnen Dots zum einen der Skalierungsfaktor der einzelnen Kameras zum anderen der Mittelpunkt sowie der Radius des Suchbereichs berechnet. Durch die Markierungsstellen im Winkel von 0°, 120°, 240° im globalem Koordinatensystem kann die Winkelzuordnung und der jeweilige Sichtbereich der einzelnen Kameras bestimmt werden. Der Sichtbereich der einzelnen Kameras ist insbesondere durch die drei Rechtecke in Figur 7 dargestellt, wobei die Formelemente 41 der Kreisbahn des Kreiscalipers zur Erfassung der Klebstoffspur entsprechen können.

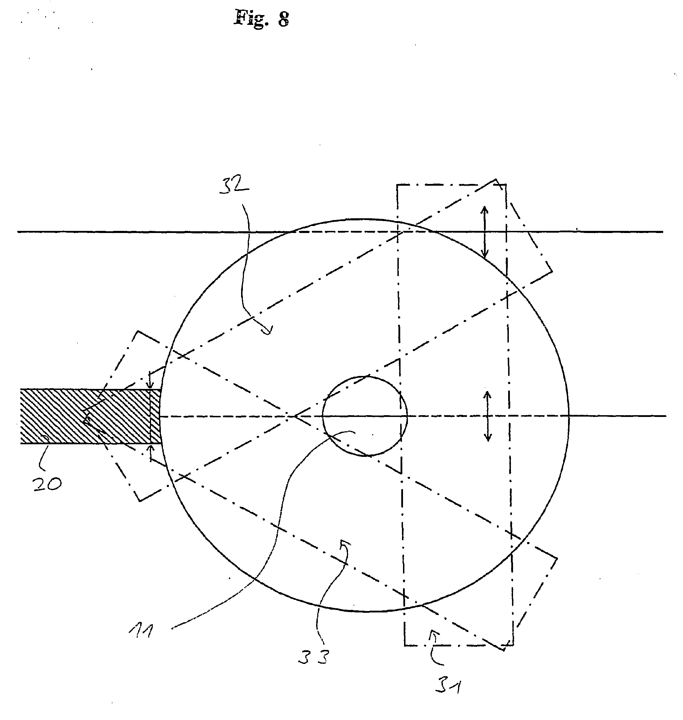

In Fig. 8 ist die Auftragseinrichtung 11 dargestellt, wobei jeweils in Strichpunktlinie die Streifen 31, 32 und 33 um die Auftragseinrichtung 11 dargestellt, welche den Auslesebereich der einzelnen Kameras darstellen. Die Klebstoffspur 20 wird dabei im Überlappungsbereich der Streifen 32 und 33 überwacht, so dass diese beiden Kameras aktiv sind. Wenn sich der Verlauf der Klebstoffspur im Verhältnis zur Auftragseinrichtung 11 ändert, so wird gegebenenfalls lediglich eine der beiden Kameras aktiv, wobei hierzu ein nicht dargestellter im wesentlichen kreisförmiger Caliper verwendet wird, der um die Auftragseinrichtung 11 konzentrisch angeordnet ist.

Gemäß dieser Ausführungsform wird der Kreiscaliper durch mehrere Kameras gebildet, welche um die Auftragseinrichtung angeordnet sind, jedoch insbesondere in einem unterschiedlichen Radius von dem Mittelpunkt der Auftragseinrichtung angebracht sein können. Zur Inspektion einer Auftragsstruktur bzw. Kleberspur werden die Kameras auf einen Kreis bzw. eine Kreisbahn ausgerichtet, dessen Mittelpunkt mit dem Mittelpunkt der Auftragseinrichtung übereinstimmt. Auf dieser Kreisbahn findet die oben erläuterte optische Erfassung der Kleberspur statt.

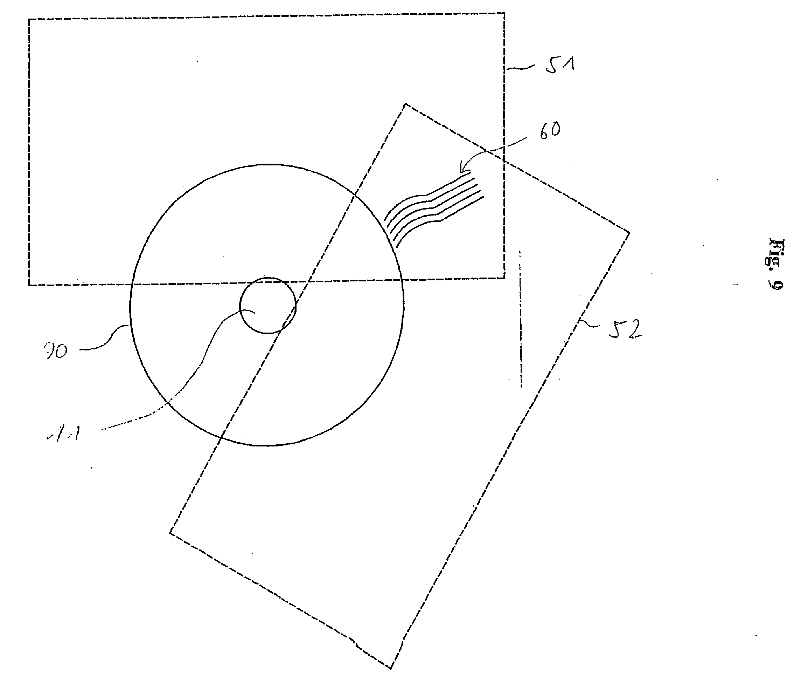

Gemäß Figur 9 wird nun die dreidimensionale Profilauswertung mit Hilfe einer Projektion beschrieben, um für eine Positionskorrektur der Auftragseinrichtung zu sorgen. In Fig. 9 sind aus Übersichtlichkeitsgründen wiederum nur zwei Kamerasichtfelder 51, 52 gestrichelt dargestellt. Im Überlappungsbereich der beiden Kamerasichtfelder 51, 52 sind eine Vielzahl von Laserlinien 60 dargestellt, welche zur Profilauswertung hinsichtlich der Höhe und der Kontur von Strukturraupen und auf die Erzeugung von sogenannten Softkonturen verwendet werden. Die Laserlinien 60 werden von einer Projektionseinrichtung erzeugt, welche beispielsweise an dem optischen Sensor mit drei Kameras angeordnet sein kann. Ferner kann die Projektionseinrichtung jedoch auch unmittelbar an der Auftragseinrichtung 11 angeordnet sein. Der Sensor mit den drei Kameras ist schematisch durch den Kreis 70 dargestellt. Durch die auf das Bauteil 30 bzw. Blech 30 projizierten Laserlinien bzw. Laserstreifen werden Konturen auf dem Bauteil hervorgehoben, die mit üblicher Bildverarbeitung für die dreidimensionale Auswertung nicht verwendbar sind. Mit Hilfe der Laserlinien auf dem Bauteil werden künstliche Merkmale erzeugt, die dann mittels der Bildverarbeitung gemäß der Stereometrie ausgewertet werden können,. Somit zeigt Figur 9 das Prinzip der dreidimensionalen Lageerkennung vor dem Dichtmittelauftrag, falls keine harten, auswertbaren Merkmale vorhanden sind.

Somit wird ein Verfahren bzw. eine Vorrichtung zum Erkennen einer auf einem Substrat aufzubringenden Struktur, vorzugsweise eine Kleberraupe oder Kleberspur, mit mindestens einer Kamera, insbesondere mehreren Kameras beschrieben. Dabei wird das Einlernen einer Referenzauftragsstruktur durch lediglich ein einmaliges Abfahren dieser Referenzauftragsstruktur derart vorgenommen, dass die Bilder aller Kameras in einer Bildsequenz gespeichert werden.

Ferner wird ein Verfahren zum Erkennen einer auf einem Substrat aufzubringenden Struktur beschrieben, wobei die aufgebrachte Struktur beim Abfahren für die Bewertung der Struktur derart als optisches Abbild verarbeitet wird, dass von jeder Kamera lediglich ein Streifen des Bildes unter Bildung einer Bildsequenz aufgenommen wird und die Bildaufnahmefrequenz entsprechend der Datenverminderung durch die Aufnahme von lediglich einem Streifen des Bildes erhöht wird.

## Patentansprüche

1. Verfahren zum Erkennen einer auf einem Substrat aufzubringenden Struktur, vorzugsweise eine Kleberraupe oder Kleberspur (20), mit mehreren Kameras (12,13,14), wobei das Einlernen einer Referenzauftragsstruktur durch lediglich ein einmaliges Abfahren dieser Referenzauftragsstruktur derart vorgenommen wird, dass die Bilder aller Kameras (12,13,14) in einer Bildsequenz gespeichert werden, **dadurch gekennzeichnet, dass** von jeder Kamera lediglich ein Streifen des Bildes unter Bildung eines Teils der Bildsequenz aufgenommen wird.

2. Verfahren nach Anspruch 1, **dadurch gekennzeichnet, dass** die Bildaufnahmefrequenz entsprechend der Datenverminderung durch die Aufnahme von lediglich einem Streifen des Bildes erhöht wird.

3. Verfahren zum Erkennen einer auf einem Substrat aufzubringenden Struktur, vorzugsweise einer Kleberraupe oder Kleberspur (20), mit mehreren Kameras (12, 13, 14), **dadurch gekennzeichnet, dass** die aufgebrachte Struktur beim Abfahren für die Bewertung der Struktur derart als optisches Abbild verarbeitet wird, dass von jeder Kamera lediglich ein Streifen des Bildes unter Bildung einer Bildsequenz aufgenommen wird und die Bildaufnahmefrequenz entsprechend der Datenverminderung durch die Aufnahme von lediglich einem Streifen des Bildes erhöht wird.

4. Verfahren nach zumindest einem der Ansprüche 1 bis 3, **dadurch gekennzeichnet, dass** die Bildstreifen der einzelnen Kameras zu einem einzigen Bild zusammengefügt werden.

5. Verfahren nach zumindest einem der Ansprüche 1 bis 4, **dadurch gekennzeichnet, dass** pro Kamera in etwa nur 1/4 der Bildzeilen als Streifen des Bildes verwendet werden und die Bildaufnahmefrequenz vervierfacht wird.

6. Verfahren nach zumindest einem der vorhergehenden Ansprüche, **dadurch gekennzeichnet, dass** die Parametrierung der von der Referenzauftragsstruktur erhaltenen Bildsequenz, welche aus einem einzigen Bildaufnahmelauf aller Kameras resultiert, automatisch durch ein einmaliges externes Anzeigen der Referenzauftragsstruktur vorgenommen wird und zum Vergleich mit einer aufgebrachten Kleberspur verwendet wird.

7. Verfahren nach Anspruch 6, **dadurch gekennzeichnet, dass** für die Parametrierung der Roboterverfahrweg, die Roboterverfahrzeit, die Richtung, die Breite und die Güte der Kleberspur verwendet wird.

8. Verfahren nach zumindest einem der vorhergehenden Ansprüche, **dadurch gekennzeichnet, dass** eine Bewertungsfunktion, insbesondere eine Fuzzy-Bewertung, zum Auswerten der Klebstoffspur verwendet wird.

9. Verfahren nach Anspruch 8, **dadurch gekennzeichnet, dass** die Breite des Kantenpaares der rechten und linken Kante der Kleberspur, der mittlere Grauwert des projizierten Grauwertprofils zwischen dem Kantenpaar, der Randkontrast und der Positionsverlauf mittels der Bewertungsfunktion verrechnet werden.

10. Verfahren nach zumindest einem der vorhergehenden Ansprüche, **dadurch gekennzeichnet, dass** die Kanten der Kleberspur auf einer umlaufenden Bahn, insbesondere im wesentlichen einer Kreisbahn in Form eines kreisförmigen Calipers, ermittelt werden, wobei innerhalb der umlaufenden Bahn die Kleberspur verläuft.

11. Verfahren nach Anspruch 10, **dadurch gekennzeichnet, dass** der Mittelpunkt der Kreisbahn oder das Zentrum der umlaufenden Bahn im wesentlichen mit der Stelle übereinstimmt, aus welcher der Kleber zur Bildung der Kleberspur austritt.

12. Verfahren nach Anspruch 10 oder 11, **dadurch gekennzeichnet, dass** jede Kamera zumindest ein Segment des aus der Kreisbahn gebildeten Kreises oder der Umlaufbahn überwacht.

13. Verfahren nach Anspruch 12, **dadurch gekennzeichnet, dass** jede Kamera zumindest einen Überlappungsbereich mit zumindest einer angrenzenden Kamera überwacht.

14. Verfahren nach einem der Ansprüche 10 bis 13, **dadurch gekennzeichnet, dass** die Winkelwerte der Kreisbahn von 0 bis 360° ein globales Koordinatensystem bilden, wobei den Bildern der einzelnen Kameras ein Segment der Kreisbahn zugeordnet wird.

15. Verfahren nach einem der Ansprüche 10 bis 14, **dadurch gekennzeichnet, dass** eine erste Kamera mindestens einen Winkelbereich von -10° bis 130°, eine zweite Kamera mindestens einen Winkelbereich von 110° bis 250° und eine dritte Kamera mindestens einen Winkelbereich von 230° bis 10° abdeckt.

16. Verfahren nach einem der Ansprüche 10 bis 15, **dadurch gekennzeichnet, dass** bei dem Verlauf der Kleberspur (20) von einer Kamera zur nächsten automatisch umgeschaltet wird, wenn die Kleberspur von dem Segment der Kreisbahn oder der Umlaufbahn einer Kamera über den Überlappungsbereich in das Segment der Kreisbahn einer anderen Kamera verläuft.

17. Verfahren nach zumindest einem der vorhergehenden Ansprüche, **dadurch gekennzeichnet, dass** zur Beleuchtung LED-Leuchtmittel verwendet werden, welche eine Lichtfarbe umfassen, die einen geeigneten Kontrast zur Farbe der Auftragsstruktur aufweist.

18. Verfahren nach Anspruch 17, wobei Infrarot-LEDs oder UV-LEDs verwendet werden.

19. Verfahren nach Anspruch 17 oder 18, **dadurch gekennzeichnet, dass** Leuchtdioden verwendet werden, insbesondere RGB-LEDs.

20. Verfahren nach einem der vorhergehenden Ansprüche 17 bis 19, **dadurch gekennzeichnet, dass** LEDs in Farbtripein aus den Farben rot, grün und blau verwendet werden.

21. Verfahren nach einem der Ansprüche 17 bis 20, **dadurch gekennzeichnet, dass** die LEDs geblitzt werden, wobei insbesondere Stromimpulse von 1,0 bis 0,01 ms auf die Dioden aufgebracht werden.

22. Verfahren nach einem der vorhergehenden Ansprüche 1 bis 21, wobei eine Referenzkontur von zumindest zwei Kameras ermittelt wird, um eine dreidimensionale Positionskorrektur für die Auftragseinrichtung mit Hilfe des Stereometrieverfahrens durchzuführen.

23. Verfahren nach Anspruch 22, **dadurch gekennzeichnet, dass** die beiden Kameras das Substrat (30), einen Bauteilabschnitt oder ein oder mehrere Bauteile als Vollbild oder Großbild aufnehmen, wobei die Vollbilder oder Großbilder der beiden Kameras einen Überlappungsbereich ergebende dreidimensionale Lageerkennung der Referenzkontur zur Justierung der Auftragseinrichtung vor dem Aufbringen der Struktur verwendet wird.

24. Verfahren nach einem der Ansprüche 22 oder 23, **dadurch gekennzeichnet, dass** eine Projektion zur dreidimensionalen Auswertung auf den Bereich der Referenzkontur aufgebracht wird, insbesondere eine oder mehrere Laserlinien als Projektion auf das Substrat (30) aufgebracht werden.

25. Verfahren nach einem der Ansprüche 1 bis 24, **dadurch gekennzeichnet, dass** eine Kalibrierung der einzelnen Kameras (12,13,14) zur Zuordnung der Winkelzugehörigkeit vorgenommen wird, wobei insbesondere ein Kreisbogen der Kalibriervorrichtung mit Markierungsstellen mit 0°, 120° und 240° für drei Kameras verwendet wird.

26. Verfahren nach einem der Ansprüche 1 bis 25, **dadurch gekennzeichnet, dass** der Abstand der Einrichtung zum Auftragen der Struktur zu einem Bauteilmerkmal gemessen wird, um eine Lageprüfung der aufgebrachten Struktur durchzuführen, wobei zur Abstandsmessung insbesondere eine linienförmige Grauwertkantenantastung verwendet wird.

27. Vorrichtung zum Erkennen einer auf einem Substrat aufzubringenden Struktur, vorzugsweise eine Kleberraupe oder Kleberspur (20), zur Durchführung eines Verfahrens gemäß den Ansprüchen 1 bis 26, wobei zumindest ein Beleuchtungsmodul und eine Sensoreinheit vorgesehen ist, und wobei die Sensoreinheit aus mehreren Kameras (12,13,14), aufgebaut ist, wobei die Kameras (12,13,14) um die Einrichtung zum Auftragen der Struktur (11) vorgesehen sind und an dieser derart angeordnet sind, dass die Kameras (12,13,14) jeweils auf die Einrichtung zum Auftragen der Struktur (11) ausgerichtet sind, **dadurch gekennzeichnet, dass** die einzelnen Kameras derart verschaltet werden, dass die Bilder aller Kameras in einer Bildsequenz gespeichert werden, wobei von jeder Kamera lediglich ein Streifen des Bildes unter Bildung eines Teils der Bildsequenz aufgenommen wird, wobei eine oder mehrere Kameras (12,13,14) zumindest einen im wesentlichen kreisförmigen Caliper oder umlaufenden Caliper bilden, dessen Mittelpunkt oder Zentrum im wesentlichen die Einrichtung zum Auftragen der Struktur (11) bildet, wobei insbesondere die Kameras (12,13,14) auf einen Kreis um die Auftragseinrichtung (11) ausgerichtet sind, dessen Mittelpunkt im wesentlichen mit dem Mittelpunkt der Auftragseinrichtung (11) übereinstimmt.

28. Vorrichtung nach Anspruch 27, **dadurch gekennzeichnet, dass** sich die axiale Längsachse der einzelnen Kameras in Blickrichtung im wesentlichen mit der axialen Längsachse der Auftragseinrichtung (11) schneidet, wobei die einzelnen Kameras, insbesondere drei Kameras (12,13,14), in Umfangsrichtung in jeweils gleichem Abstand voneinander angeordnet sind.

29. Vorrichtung nach Anspruch 27, **dadurch gekennzeichnet, dass** die Bildaufnahmefrequenz entsprechend der Datenverminderung durch die Aufnahme von lediglich einem Streifen des Bildes erhöht wird.

30. Vorrichtung nach Anspruch 27 und/oder 29, **dadurch gekennzeichnet, dass** die Bildstreifen der einzelnen Kameras zu einem einzigen Bild zusammengefügt werden, um eine Referenzauftragsstruktur einzulernen und mit einer aufgebrachten Kleberspur (20) zu vergleichen.

31. Vorrichtung nach einem der Ansprüche 27 bis 30, **dadurch gekennzeichnet, dass** die einzelnen Kameras (12,13,14) einen Überlappungsbereich von jeweils mindestens 10°, insbesondere 30° bis 90°, zur nächsten Kamera aufweisen.

32. Vorrichtung nach einem der vorhergehenden Ansprüche 27 bis 31, **dadurch gekennzeichnet, dass** das Beleuchtungsmodul aus LEDs, insbesondere Infrarot-LEDs, UV-LEDs oder RGB-LEDs aufgebaut ist.

33. Vorrichtung nach Anspruch 32, **dadurch gekennzeichnet, dass** die LEDs geblitzt werden, wobei Stromimpulse von 1,0 bis 0,01 ms verwendet werden.

34. Vorrichtung nach einem Ansprüche 27 bis 33, **dadurch gekennzeichnet, dass** zur Kalibrierung der einzelnen Kameras für (12,13,14) die Zuordnung der Winkelzugehörigkeit eine Kalibriervorrichtung (40) mit einzelnen Formelementen verwendet wird, wobei die Formelemente insbesondere einen Winkelabstand von im wesentlichen 10° aufweisen.

35. Vorrichtung nach Anspruch 34, **dadurch gekennzeichnet, dass** die Kalibriervorrichtung (40) zumindest drei Markierungsstellen (42) aufweist, die in einem Kreisbogen der Kalibriervorrichtung (40) von im wesentlichen 0°, 120° und 240° angeordnet sind, um drei Kameras (12,13,14) zu kalibrieren.

36. Vorrichtung nach Anspruch 35, **dadurch gekennzeichnet, dass** sich die Markierungsstellen (42) auf der Kreisbahn in einem Winkelbereich von jeweils im wesentlichen 10° erstrecken, wobei die Markierungsstellen (42) insbesondere durch zumindest zwei Formelemente gebildet werden.

37. Vorrichtung nach einem der Ansprüche 27 bis 36, **dadurch gekennzeichnet, dass** eine Projektionseinrichtung an der Auftragseinrichtung (11) vorgesehen ist, weiche einen oder mehrere Merkmale, insbesondere Streifen, auf das Substrat (30) für eine dreidimensionale Auswertung projiziert.

38. Vorrichtung nach Anspruch 37, **dadurch gekennzeichnet, dass** die Projektionseinrichtung eine oder mehrere Laserlinien zur dreidimensionalen Profilauswertung aussendet.

## Claims

1. Method for recognizing a structure to be applied onto a substrate, preferably an adhesive line or adhesive trail (20), with multiple cameras (12, 13, 14), **characterized in that** the teach-in of a reference application structure is carried out by means of just a single scan of said reference application structure such that the images of all cameras (12, 13, 14) are stored in a sequence of images, **characterized in that** each camera records just a strip of the image to form a part of the sequence of images.

2. Method according to claim 1, **characterized in that** the image recording rate is increased in line with the data reduction achieved by recording just a strip of the image.

3. Method for recognizing a structure to be applied onto a substrate, preferably an adhesive line or adhesive trail (20), with multiple cameras (12, 13, 14), **characterized in that** the applied structure is processed as an optical representation during the scan for assessment of the structure such that each camera records just a strip of the image to form a sequence of images and the image recording rate is increased in line with the data reduction achieved by recording only a strip of the image.

4. Method according to at least one of the claims 1 to 3, **characterized in that** the image strips of the individual cameras are joined into a single image.

5. Method according to at least one of the claims 1 to 4, **characterized in that** per each camera only approx. 1/4 of the image lines are used as image strip and the image recording rate is quadrupled.

6. Method according to at least one of the preceding claims, **characterized in that** the parameterization of the sequence of images obtained from the reference application structure that results from a single image recording run of all cameras is carried out automatically by means of a one-time external marking of the reference application structure, and is used for comparison to an applied adhesive trail.

7. Method according to claim 6, **characterized in that** the robot travel path, the robot travel time, the direction, the width and the quality of the adhesive trail are used for parameterization.

8. Method according to at least one of the preceding claims, **characterized in that** an assessment function, in particular a fuzzy assessment, is used to analyze the adhesive agent track.

9. Method according to claim 8, **characterized in that** the width of the pair of edges comprising the right and the left edge of the adhesive trail, the mean gray scale value of the projected gray scale value profile between the pair of edges, the edge contrast, and the progression of position are included in the calculation by means of the assessment function.

10. Method according to at least one of the preceding claims, **characterized in that** the edges of the adhesive trail are determined on a surrounding track, in particular essentially a circular track in the form of a circular caliper, whereby the adhesive trail progresses within the surrounding track.

11. Method according to claim 10, **characterized in that** the center of the circular line or the center of the surrounding track essentially coincides with the site from which the adhesive emanates to form the adhesive trail.

12. Method according to claims 10 or 11, **characterized in that** each camera monitors at least one segment of the circle or orbit formed by the circular line.

13. Method according to claim 12, **characterized in that** each camera monitors at least one overlapping area jointly with at least one adjacent camera.

14. Method according to any one of the claims 10 to 13, **characterized in that** the angle values of the circular line from 0 to 360° form a global coordinate system, whereby a segment of the circular line is assigned to the images of the individual cameras.

15. Method according to any one of the claims 10 to 14, **characterized in that** a first camera covers at least a range of angles from -10° to 130°, a second camera at least a range of angles from 110° to 250°, and a third camera at least a range of angles from 230° to 10°.

16. Method according to any one of the claims 10 to 15, **characterized in that** a switch from one camera to the next is made automatically when the adhesive trail (20) progresses from the segment of a circular line or the orbit of one camera via the overlapping area to the segment of a circular line of a different camera.

17. Method according to at least one of the preceding claims, **characterized in that** LED illumination means the color of which provides a suitable contrast to the color of the application structure are used for illumination.

18. Method according to claim 17, whereby infrared LEDs or UV LEDs are used.

19. Method according to claim 17 or 18, **characterized in that** light-emitting diodes are used, in particular RGB-LEDs.

20. Method according to any one of the preceding claims 17 to 19, **characterized in that** LEDs with the triple colors, red, green, and blue, are used.

21. Method according to any one of the claims 17 to 20, **characterized in that** the LEDs are flashed, whereby, in particular, pulses of current of 1.0 to 0.01 ms are applied to the diodes.

22. Method according to any one of the preceding claims 1 to 21, **characterized in that** a reference contour is determined by at least two cameras, in order to carry out a three-dimensional positional correction for the application facility by means of the stereometry procedure.

23. Method according to claim 22, **characterized in that** the two cameras record the substrate (30), a section of the component or one or more components in the form of a full image or large image, whereby the full images or large images of the two cameras comprise an overlapping area in leading direction, and whereby the three-dimensional recognition of reference contour position resulting in the overlapping area is used for adjustment of the application facility prior to applying the structure.

24. Method according to any one of the claims 22 or 23, **characterized in that** a projection is made onto the area of the reference contour for three-dimensional analysis, in particular one or more laser lines are applied to the substrate (30) in the form of a projection.

25. Method according to any one of the claims 1 to 24, **characterized in that** the individual cameras (12, 13, 14) are calibrated in order to assign the angle assignment, whereby in particular a circular arc of the calibrating device with marker points at 0°, 120°, and 240° for three cameras is used.

26. Method according to any one of the claims 1 to 25, **characterized in that** the distance of the facility for application of the structure from a feature of the component is measured in order to carry out a positional test of the applied structure, whereby in particular a line-shaped gray scale value scan is used for distance measurement.

27. Apparatus for recognizing a structure to be applied onto a substrate, preferably an adhesive line or adhesive trail (20), for carrying out a method according to the invention according to claims 1 to 26, whereby at least one illumination module and one sensor unit are provided, and wherein the sensor unit is made up of multiple cameras (12, 13, 14), whereby the cameras (12, 13, 14) are provided around the facility for applying the structure (11), and each is arranged such that the cameras (12, 13, 14) are directed at the facility for applying the structure (11), **characterized in that** the individual cameras are circuited such that the images of all cameras are stored in a sequence of images, wherein each camera records just a strip of the image to form a part of the sequence of images, wherein one or more cameras (12, 13, 14) form at least an essentially circular caliper or surrounding caliper whose center point or center is formed essentially by the facility for application of the structure (11), whereby in particular the cameras (12, 13, 14) are directed at a circle around the application facility (11) whose center point essentially coincides with the center point of the application facility (11).

28. Apparatus according to claim 27, **characterized in that** the axial longitudinal axis of the individual cameras essentially intersects, in the direction of view, the axial longitudinal axis of the application facility (11), wherein the individual cameras, in particular three cameras (12, 13, 14), are arranged at equal distances from each other in the direction of the circumference.

29. Apparatus according to claim 27, **characterized in that** the image recording rate is increased in line with the data reduction achieved by recording just a strip of the image.

30. Apparatus according to claim 27 and/or 29, **characterized in that** the image strips of the individual cameras are joined into a single image in order to teach-in the reference application structure and compare it to an applied adhesive trail (20).

31. Apparatus according to any one of the claims 27 to 30, **characterized in that** the individual cameras (12, 13, 14) comprise an overlapping area of at least 10°, in particular 30° to 90°, relative to the next camera.

32. Apparatus according to any one of the preceding claims 27 to 31, **characterized in that** the illumination module is made up of LEDs, in particular infrared LEDs, UV LEDs or RGB LEDs.

33. Apparatus according to claim 32, **characterized in that** the LEDs are flashed, whereby pulses of current of 1.0 to 0.01 ms are used.

34. Apparatus according to any one of the claims 27 to 33, **characterized in that** a calibrating device (40) with individual form elements is used for calibrating the individual cameras (12, 13, 14) for the assignment of the angle assignment, whereby said form elements comprise, in particular, an angle distance of essentially 10°.

35. Apparatus according to claim 34, **characterized in that** the calibrating device (40) comprises at least three marker sites (42) that are arranged in a circular arc of the calibrating device (40) of essentially 0°, 120°, and 240°, in order to calibrate three cameras (12, 13, 14).

36. Apparatus according to claim 35, **characterized in that** the marker sites (42) on the circular line each extend in an angle range of essentially 10°, whereby the marker sites (42) are formed, in particular, by at least two form elements.

37. Apparatus according to any one of the claims 27 to 36, **characterized in that** a projection facility is provided on the application facility (11), which projection facility projects one or more features, in particular strips, onto the substrate (30) for a three-dimensional analysis.

38. Apparatus according to claim 37, **characterized in that** the projection facility emits one or more laser lines for three-dimensional profile analysis.

## Revendications

1. Procédé pour reconnaître une structure à appliquer sur un substrat, de préférence un cordon de colle ou une trace de colle (20), au moyen de plusieurs caméras (12, 13, 14), l'apprentissage d'une structure d'application de référence étant opérée par un balayage unique de cette structure d'application de référence de manière telle que les images de toutes les caméras (12, 13, 14) sont stockées dans une séquence d'images, **caractérisé en ce que** chaque caméra prend une vue uniquement d'une bande de l'image en formant une partie de la séquence d'images.

2. Procédé selon la revendication 1, **caractérisé en ce que** la fréquence de prise de vue subit une augmentation correspondant à la réduction des données du fait de la prise de vue d'uniquement une bande de l'image.

3. Procédé pour reconnaître une structure à appliquer sur un substrat, de préférence un cordon de colle ou une trace de colle (20), au moyen de plusieurs caméras (12, 13, 14), **caractérisé en ce que** la structure appliquée, lors du balayage aux fins de l'évaluation de la structure, est traitée en tant qu'image optique de manière telle que chaque caméra prend une vue uniquement d'une bande de l'image avec formation d'une séquence d'images et la fréquence de prise de vue subit une augmentation correspondant à la réduction des données du fait de la prise de vue d'uniquement une bande de l'image.

4. Procédé selon au moins l'une des revendications 1 à 3, **caractérisé en ce que** les bandes d'images des différentes caméras sont regroupées pour constituer une image unique.

5. Procédé selon au moins l'une des revendications 1 à 4, **caractérisé en ce que**, pour chaque caméra, à peu près seulement ¼ des lignes d'images sont utilisées comme bande de l'image et la fréquence de prise de vue est quadruplée.

6. Procédé selon au moins l'une des revendications précédentes, **caractérisé en ce que** la paramétrisation de la séquence d'images obtenue par la structure d'application de référence et résultant d'un unique cycle de prise de vue de toutes les caméras, est opérée automatiquement par un affichage externe unique de la structure d'application de référence et est utilisée pour comparaison avec une trace de colle appliquée.

7. Procédé selon la revendication 6, **caractérisé en ce que** sont utilisés, aux fins de la paramétrisation, la trajectoire de déplacement du robot, le temps de déplacement du robot, la direction, la largeur et la qualité de la trace de colle.

8. Procédé selon au moins l'une des revendications précédentes, **caractérisé en ce qu'**une fonction d'évaluation, en particulier une évaluation floue, est utilisée pour évaluer la trace de colle.

9. Procédé selon la revendication 8, **caractérisé en ce que** la largeur de la paire de bords composée du bord droit et du bord gauche de la trace de colle, la valeur moyenne de gris du profil de valeurs de gris projeté entre la paire de bords, le contraste de bord et le tracé de position sont calculés au moyen de la fonction d'évaluation.

10. Procédé selon au moins l'une des revendications précédentes, **caractérisé en ce que** les bords de la trace de colle sont détectés sur une orbite de révolution, en particulier sur une orbite sensiblement circulaire en forme de calibre circulaire, la trace de colle s'étendant à l'intérieur de l'orbite de révolution.

11. Procédé selon la revendication 10, **caractérisé en ce que** le point central de l'orbite circulaire ou le centre de l'orbite de révolution coïncident sensiblement avec l'endroit d'où la colle sort pour former la trace de colle.

12. Procédé selon la revendication 10 ou 11, **caractérisé en ce que** chaque caméra surveille au moins un segment du cercle constitué par l'orbite circulaire ou de l'orbite de révolution.

13. Procédé selon la revendication 12, **caractérisé en ce que** chaque caméra surveille une zone de chevauchement avec au moins une caméra adjacente.

14. Procédé selon l'une des revendications 10 à 13, **caractérisé en ce que** les valeurs angulaires de l'orbite circulaire de 0 à 360° constituent un système de coordonnées global, un segment de l'orbite circulaire étant affecté aux images des différentes caméras.

15. Procédé selon l'une des revendications 10 à 14, **caractérisé en ce qu'**une première caméra couvre au moins une zone angulaire allant de -10° à 130°, une deuxième caméra couvre au moins une zone angulaire allant de 110° à 250° et une troisième caméra couvre au moins une zone angulaire allant de 230° à 10°.

16. Procédé selon l'une des revendications 10 à 15, **caractérisé en ce que**, sur le tracé de la trace de colle (20), il y a commutation automatique d'une caméra à l'autre lorsque la trace de colle va du segment de l'orbite circulaire ou de l'orbite de révolution d'une caméra vers le segment de l'orbite circulaire d'une autre caméra en passant par la zone de chevauchement.

17. Procédé selon au moins l'une des revendications précédentes, **caractérisé en ce qu'**on utilise, pour l'éclairage, des moyens d'éclairage de type DEL qui incluent une couleur de lumière qui présente un contraste approprié par rapport à la couleur de la structure d'application.

18. Procédé selon la revendication 17, des DEL infrarouges ou des DEL ultraviolettes étant utilisées.

19. Procédé selon la revendication 17 ou 18, **caractérisé en ce que** sont utilisées des diodes électroluminescentes, en particulier des DEL RGB.

20. Procédé selon au moins l'une des revendications précédentes 17 à 19, **caractérisé en ce qu'**on utilise des DEL en triplets de couleurs composés des couleurs rouge, verte et bleue.

21. Procédé selon au moins l'une des revendications 17 à 20, **caractérisé en ce que** les DEL sont flashées, des impulsions de courant de 1,0 à 0,01 ms étant appliquées sur les diodes.

22. Procédé selon l'une des revendications précédentes 1 à 21, un contour de référence étant détecté par au moins deux caméras pour effectuer une correction de position tridimensionnelle pour le dispositif d'application à l'aide du procédé de stéréométrie.

23. Procédé selon la revendication 22, **caractérisé en ce que** les deux caméras font une prise de vue du substrat (30), d'une partie de composant ou d'un ou de plusieurs composants sous la forme d'une image complète ou d'une grande image, les images complètes ou grandes images des deux caméras utilisant une reconnaissance de position tridimensionnelle du contour de référence, laquelle fournit une zone de chevauchement, pour ajuster le dispositif d'application avant l'application de la structure.

24. Procédé selon l'une des revendications 22 ou 23, **caractérisé en ce qu'**une projection est appliquée sur la zone du contour de référence aux fins d'une évaluation tridimensionnelle, en particulier une ou plusieurs lignes laser sont appliquées en tant que projection sur le substrat (30).

25. Procédé selon l'une des revendications 1 à 24, **caractérisé en ce qu'**il est procédé à un calibrage des différentes caméras (12, 13, 14) pour leur associer un angle, en particulier un arc de cercle du dispositif de calibrage étant utilisé, avec des points de marquage à 0°, 120° et 240° pour 3 caméras.

26. Procédé selon l'une des revendications 1 à 25, **caractérisé en ce que** la distance entre le dispositif d'application de la structure et une caractéristique du composant est mesurée pour effectuer un contrôle de position de la structure appliquée, en particulier une détection linéaire de bords en niveaux de gris étant utilisé pour mesurer la distance.

27. Dispositif permettant de reconnaître une structure à appliquer sur un substrat, de préférence un cordon de colle ou une trace de colle (20), pour exécuter un procédé selon les revendications 1 à 26, au moins un module d'éclairage et une unité de détection étant prévus et l'unité de détection étant construite à partir de plusieurs caméras (12, 13, 14), les caméras (12, 13, 14) étant prévues autour du dispositif d'application de la structure (11) et disposées sur celui-ci de manière telle que les caméras (12, 13, 14) sont pointées chacune sur le dispositif d'application de la structure (11), **caractérisé en ce que** les différentes caméras sont couplées de manière telle que les images de toutes les caméras sont stockées dans une séquence d'images, chaque caméra prenant une vue uniquement d'une bande de l'image avec formation d'une partie de la séquence d'images, une ou plusieurs caméras (12, 13, 14) formant au moins un calibre sensiblement circulaire ou de révolution dont le point central ou le centre est constitué, pour l'essentiel, par le dispositif d'application de la structure (11), en particulier les caméras (12, 13, 14) étant pointées sur un cercle entourant le dispositif d'application (11) et dont le point central coïncide sensiblement avec le point central du dispositif d'application (11).

28. Dispositif selon la revendication 27, **caractérisé en ce que**, dans le sens du regard, l'axe longitudinal axial des différentes caméras coupe sensiblement l'axe longitudinal axial du dispositif d'application (11), les différentes caméras, en particulier trois caméras (12, 13, 14), étant disposées de manière équidistante dans le sens du pourtour.

29. Dispositif selon la revendication 27, **caractérisé en ce que** la fréquence de prise de vue subit une augmentation correspondant à la réduction des données du fait de la prise de vue d'uniquement une bande de l'image.

30. Dispositif selon la revendication 27 et/ou 29, **caractérisé en ce que** les bandes d'images des différentes caméras sont regroupées pour constituer une image unique pour apprendre une structure d'application de référence et la comparer à une trace de colle appliquée (20).

31. Dispositif selon l'une des revendications 27 à 30, **caractérisé en ce que** les différentes caméras (12, 13, 14) présentent une zone de chevauchement de respectivement au moins 10°, en particulier de 30° à 90°, avec la caméra suivante.

32. Dispositif selon l'une des revendications précédentes 27 à 31, **caractérisé en ce que** le module d'éclairage est construit à partir de DEL, en particulier de DEL infrarouges, de DEL ultraviolettes ou de DEL RGB.

33. Dispositif selon la revendication 32, **caractérisé en ce que** les DEL sont flashées, des impulsions de courant de 1,0 à 0,01 ms étant utilisées.

34. Dispositif selon l'une des revendications précédentes 27 à 33, **caractérisé en ce que**, pour calibrer les différentes caméras (12, 13, 14) pour leur associer un angle, on utilise un dispositif de calibrage (40) avec différents éléments de forme déterminée, les éléments de forme déterminée présentant en particulier une distance angulaire de sensiblement 10°.

35. Dispositif selon la revendication 34, **caractérisé en ce que** le dispositif de calibrage (40) comporte au moins trois points de marquage (42) qui sont situés sur un arc de cercle du dispositif de calibrage (40) de sensiblement 0°, 120° et 240° pour calibrer les trois caméras (12, 13, 14).

36. Dispositif selon la revendication 35, **caractérisé en ce que** les points de marquage (42) s'étendent sur l'orbite circulaire dans une plage angulaire de sensiblement 10° respectivement, les points de marquage (42) étant constitués en particulier par au moins deux éléments de forme déterminée.

37. Dispositif selon l'une des revendications 27 à 36, **caractérisé en ce qu'**est prévu, sur le dispositif d'application (11), un dispositif de projection qui projette une ou plusieurs caractéristiques, en particulier des bandes, sur le substrat (30) aux fins d'une évaluation tridimensionnelle.

38. Dispositif selon la revendication 37, **caractérisé en ce que** le dispositif de projection émet une ou plusieurs lignes laser aux fins de l'évaluation de profil tridimensionnelle.
